# EUROPEAN PATENT SPECIFICATION

(11) **EP 2 575 246 B1**
(45) Date of publication and mention of the grant of the patent: **05.09.2018**
(21) Application number: 12185612.4
(22) Date of filing: 24.09.2012
(51) Int. Cl.: H02M 3/335, H02M 1/00

(54) **Method for discharging a DC-link capacitor in a DC-DC converter apparatus, and corresponding DC-DC converter apparatus**
Verfahren zum Entladen eines Gleichstrom-Zwischenkreiskondensators in einem Gleichstrom-Wandler und entsprechender Gleichstrom-Wandler
Procédé pour décharger un condensateur de liaison CC dans un appareil convertisseur CC-CC et dispositif convertisseur CC-CC correspondant

(30) Priority: 28.09.2011 IT TO20110862
(43) Date of publication of application: 03.04.2013
(73) Proprietor: Magneti Marelli S.p.A., 20011 Corbetta (MI) (IT)
(72) Inventor: Federico, Milena, I-20011 Corbetta (Milano) (IT); Nepote, Andrea, I-20011 Corbetta (Milano) (IT)
(74) Representative: Notaro, Giancarlo

(56) References cited:
- EP-A1- 0 567 108
- EP-A1- 2 388 903
- US-A- 3 388 311
- US-A- 5 255 174

## Description

The present invention relates to a method for discharging a DC-link capacitance in an insulated DC-DC converter apparatus comprising: a high-voltage side comprising an H-network of switches, connected between an input node on which there is set up a d.c. voltage and a first winding of a transformer, and a DC-link capacitance connected in parallel to the input node of the converter apparatus; and a low-voltage side comprising a second winding of said transformer with a smaller number of turns than the first winding, with a centre tap, departing from which are a first half-winding and a second half-winding, an energy-storage reactive circuit, in particular an inductor, connected in series between said centre tap and a node configured for connection of a battery designed to apply a d.c. battery voltage, and a switching network for switching said first and second half-windings, which comprises devices arranged for connecting selectively the first and second half-windings to a fixed voltage reference, in particular a ground reference.

A DC-DC converter is a circuit that converts a d.c. source from one voltage level or value to another. Said type of converters constitutes a class of power converters. DC-DC converters are important in mobile electronic instruments, such as cellphones and laptop computers, which are battery-supplied. Said electronic instruments frequently contain different sub-circuits, in which each one requires a level of voltage different from the one supplied by the battery (typically higher or lower than the battery voltage, and sometimes even a negative voltage). Furthermore, the battery voltage decreases as the power is drawn off. DC-DC converters offer a method for generating different controlled voltage levels starting from a battery with variable voltage, in this way saving space and avoiding use of a lot of batteries for supplying energy to the various parts of the instrument.

In the automotive sector, for example, for electric cars, it is frequently necessary for said converter apparatuses to be bi-directional, making the conversion between a side at a higher voltage level and a side at a lower voltage level in both directions. For example, in hybrid vehicles two electrical networks are usually present, respectively an electrical network of a traditional type for loads such as lights or the electronic control unit for control of the thermal engine and a high-voltage electrical network for the electric engine, which can operate, for example, at voltages of around 600 V. In said context systems are required for converting energy, preferably bi-directional systems, which set the two electrical networks in communication, in particular for transferring energy from the high-voltage network supplied by a specific battery, for example, a lithium-ion battery, to the conventional lower-voltage network, which uses a converter.

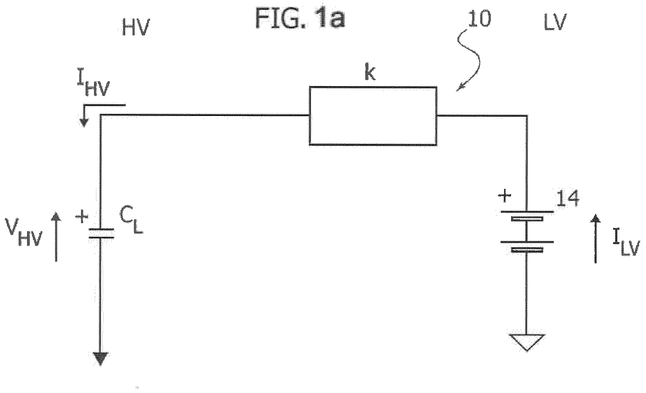

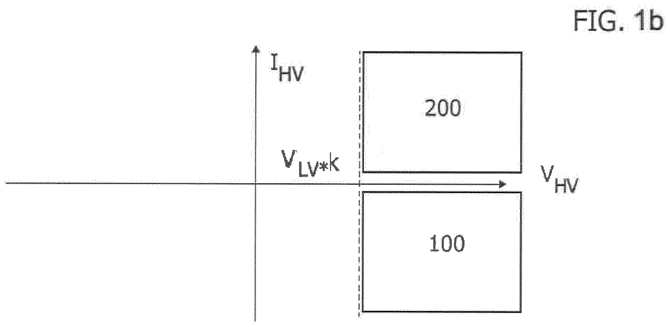

Figure 1 illustrates the block diagram of an insulated DC/DC converter, designated by the reference 10, characterized by a transformation ratio k between the high-voltage world, designated by HV, and the low-voltage world, designated by LV.

Designated by V_{HV} is a high voltage, at input to the converter 10, on which a DC-link capacitance C_{L}, in particular a capacitor, is set in parallel, whereas designated by I_{HV} is a charge/discharge current of the DC-link capacitance C_{L}, as illustrated more fully in what follows. Of course, in the present context the voltage is defined as high with respect to the voltage at the other end of the converter 10, which is, instead, a lower voltage.

The DC-link capacitance corresponds in general to the capacitor connected at input to the DC-DC converter 10, where it reaches the d.c. voltage to be converted to a lower voltage. The DC-link capacitance is usually obtained via an electrolytic or film capacitor, which decouples the input of the DC-DC converter.

The DC-DC converter apparatus 10 can in general function in two different modes.

A first mode is the so-called "buck" mode. The energy travels from the high-voltage side HV to the low-voltage side LV. Said mode is used, for example, for replacing the alternator of a motor vehicle and recharging the batteries of the motor vehicle, or else for discharging and bringing to a safety regime the DC-link capacitor C_{L} recovering on the battery 14 the energy stored therein.

In this case, according to the sign convention referred to in Figure 1, the charge/discharge current I_{HV} will have a negative sign.

In a second mode, referred to as "boost", the energy travels from the low-voltage side LV to the high-voltage side HV. Said mode is used, for example, for charging, using lower-voltage batteries, batteries that operate in a higher voltage range, or else for carrying out a pre-charging of the DC-link capacitor.

In this case, the charge/discharge current I_{HV} is positive according to the convention of the signs used in Figure 1.

In both modes, however, said DC/DC converter apparatus 10 has functional limits due to the ratio of turns of the transformer that characterizes it and to the voltage value of the batteries on the low-voltage side LV.

In fact:
- the buck mode is characterized in that it brings about a conversion of a step-down type; in this case, then, the converter 10 functions only when the battery voltage brought onto the high-voltage side (V_{LV}*k) is lower than the high voltage V_{HV};
- on the other hand, the boost mode is characterized in that it brings about a conversion of a step-up type; in this case, then, the converter 10 functions only when the battery voltage brought onto the high-voltage side HV, (V_{LV}*k) is lower than the high voltage V_{HV}.

Represented in this connection in Figure 1b is a diagram that shows the charge/discharge current I_{HV} as a function of the values assumed by the high voltage V_{HV}. Said diagram shows the threshold at the value of battery voltage V_{LV} multiplied by the transformation ratio k both for the buck mode, in a quadrant designated by the reference 100, and for the boost mode, in a quadrant designated by the reference 200.

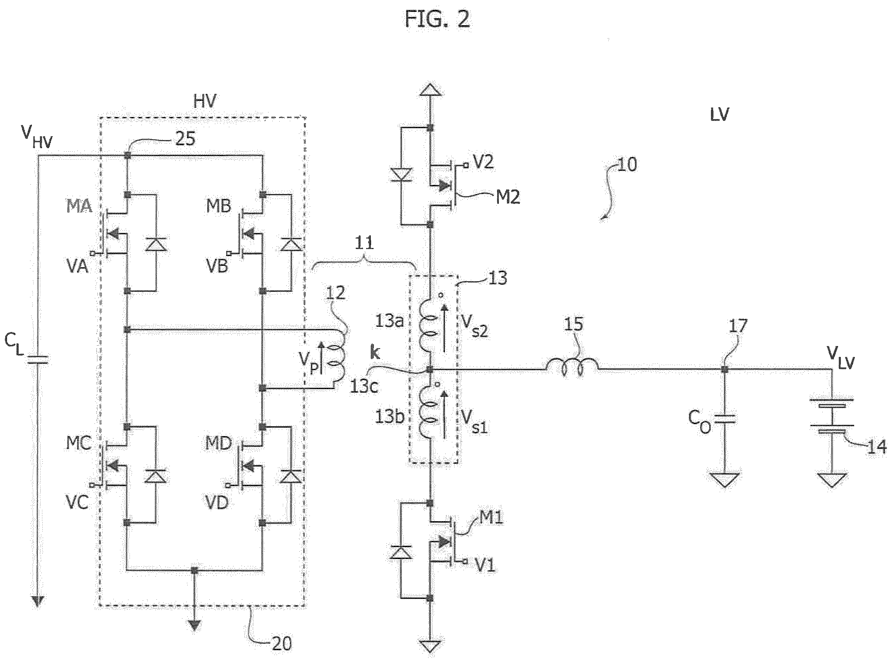

Illustrated in detail in Figure 2 is an architecture of an example of the converter apparatus 10, of an insulated bi-directional switching type. Such a converter with the features of the preamble of claim 1 is disclosed e.g. in document US 5,255,174 A. In particular, in Figure 2 designated by the reference 11 is a transformer with a ratio of turns, or transformation ratio, k between the primary and the secondary windings greater than one. Said transformer 11 hence comprises a primary winding, designated by the reference 12, whereas designated by the reference 13 is a secondary winding.

With reference to the low-voltage side LV, the secondary winding 13 is of the centre-tap type with double winding, i.e., respectively two half-windings 13a and 13b that depart from a centre tap 13c, which constitutes a common terminal. Designated by 14 is a battery, which applies a battery voltage V_{LV} to be converted, which is brought back, through an energy-storage reactive circuit, here obtained via a series inductor 15, to the centre tap 13c of the secondary winding 13 of the transformer 11. The two half-windings 13a and 13b of the secondary 13 that depart from the centre tap 13c are connected via the other terminals thereof to a ground reference 16 via respective main switches M1 and M2, which identify a switching network for the low voltage, i.e., for carrying out boost conversion. Said first main switch M2 and said second main switch M1 are obtained via transistors, in particular MOSFETs, driven by a controller module, not illustrated in Figure 1, which sends respective driving signals, V1 and V2, in particular voltage levels, on their control electrode, for example, the gate of the MOSFET, to cause opening and closing thereof. The converter apparatus 10 can thus operate as a switching insulated DC-DC boost converter, with operation of the main switches M1, M2 of a push-pull type.

Instead, connected on the high-voltage side HV is an H-bridge 20, comprising a first pair of MOSFETs MA, MC, connected between the input voltage and the ground reference 16, which form a first leg of the H-bridge 20 and are connected to the positive terminal of the primary 12 via their common (source) terminal. The H-bridge 20 moreover comprises further MOSFETs MB and MD, which form the second leg of the bridge 20 and are connected to the negative terminal of the primary 12 via their common node.

Each MOSFET in the diagram of Figure 1 and in the subsequent diagrams is represented together with its own body diode connected between source and drain.

Represented between an input node 25 of the converter apparatus 10 and the ground reference 16 is the DC-link capacitance C_{L}, on which a voltage drop occurs, corresponding to the high voltage V_{HV} at the input to the DC-DC converter 10.

As has been said, in said classic mode of operation of a DC-DC converter, the DC-link capacitance C_{L} can be discharged with a driving of a buck type until the high voltage V_{HV} on the capacitor C_{L} reaches the value V_{LV} of the battery 14 multiplied by the ratio of turns k of the transformer 11.

In the aforesaid driving of a buck type, the modulation of the diagonals of the high-voltage H-bridge 20, i.e., the simultaneous closing alternatively of the pair of MOSFETs MA, MD or MB, MC, with a duty cycle that is a function of the high voltage V_{HV} on the DC-link capacitance C_{L} and of the discharge current of said capacitor C_{L}, is performed alternatively with a time interval that is half the inverse of the switching frequency, to prevent saturation of the core of the transformer 11.

With one diagonal active, for example, the MOSFETs MA and MD, the primary voltage Vₚ is brought back onto the secondary winding 13 divided by the ratio of turns k, and corresponds in this case to the voltage Vₛ₁ on the half-winding 13b connected to the switch M2. The passage of the energy of the capacitor C_{L} to the inductance 15 and to an output node 17 of the converter to which an output capacitor Cₒ is connected and on which the battery 14 can be connected, as illustrated in Figure 1, occurs with the conduction of the MOSFET switch M1 or only of the body diode of the MOSFET switch M1. Subsequent discharging of the inductance 15 on the battery 14 occurs in the time remaining for activation of the other diagonal with the conduction of both of the main switches M1 and M2 in so far as it is assumed that there is on the high-voltage side HV of the converter a driving of a hard-switching type, which leads, in this interval, to having 0V across the transformer 11.

With the activation of the other diagonal (MOSFET MB, MC) of the bridge 20, the inductance 15 is recharged via the voltage Vₛ₂ on the other half-winding 13a via the main MOSFET switch M2; discharging thereof will occur in a way similar to what has been described above.

It may be shown that driving of the high-voltage side HV, whether of a hard-switching type or a phase-shift type, does not adversely affect the modality of discharge of the capacitance C_{L} in so far as in both cases the modulation that is obtained regards the time of turning-on of the diagonals and hence the interval in which there is actual passage of energy between the high-voltage side HV and the low-voltage side LV.

The energy stored by the DC-link capacitance C_{L} is hence transferred directly via the transformer 11 to the inductance 15 and to the battery 14.

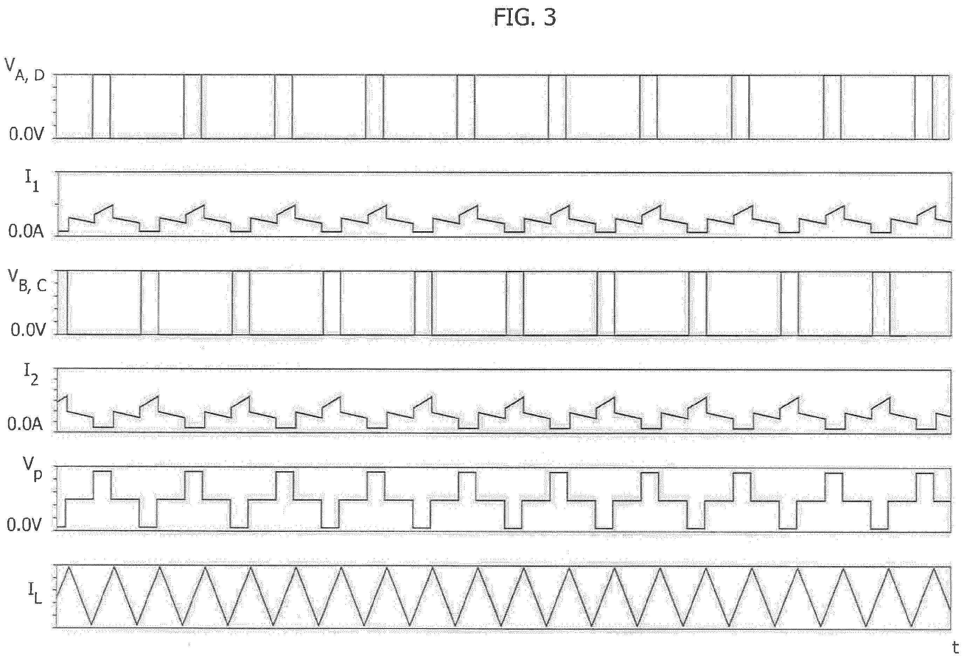

Illustrated in Figure 3 are the time plots of the pairs of driving voltages VA, VD and VB, VC, corresponding to the transistors MA, MD and MB, MC on the two diagonals of the bridge 20, the voltage on the primary winding V_{P}, and the current I_{L} in the inductor 15. Said plots are obtained from driving of a buck type. Likewise represented are the currents I₁ and I₂ that flow in the main MOSFETs M1 and M2.

From the foregoing, it emerges that buck driving can be carried out until the voltage on the secondary, equal to V_{HV}/k, is higher than the battery voltage V_{LV}.

The discharge of the DC-link capacitance C_{L} could thus proceed in a dissipative way, for example, exploiting the parasitic resistances of the bridge and/or of the transformer, or else short-circuiting the legs of the bridge, or yet again via driving of one of the semiconductor devices in linear regime.

Hence, said type of circuit presents the drawback of not enabling complete use of a driving of a buck type for discharging the capacitor, it being necessary to resort to dissipative methods when the voltage on the capacitor drops below the level of the battery voltage multiplied by the ratio of turns.

Document US 3 388 311 A discloses a converter operating as buck converter, which is configured in a way that avoids using a transistor in series on the winding. An inductor is provided to store the excess voltage energy. The converter includes also circuit paths which can be selectively activated in order to make the current flow in opposite directions in the primary winding of the circuit.

The European patent application EP 567 108 A1, in the name of the Applicant, discloses a control circuit for a discharge lamp in which, on the input stage, it is provided a H bridge of switches connected to the lamp that is driven with a 50% duty cycle to transfer the power to the lamp.

The European patent application EP 2 338 903 A1 is an European patent application, in the name of the Applicant, published after the priority date of the outstanding application, therefore prior art under art. 54(3) EPC, that discloses a circuit for the limitation of the in-rush current.

The object of the present invention is to provide a process solution for discharging a DC-link capacitance in a DC-DC converter apparatus that will overcome the drawbacks of the known art, and, in particular, will enable discharge of the DC-link capacitance to be carried out, avoiding the need to resort to dissipative methods when the voltage on the DC-link capacitance drops below the battery voltage multiplied by the ratio of turns.

According to the present invention, the above object is achieved thanks to a discharging method, as well as a corresponding converter apparatus, which present the characteristics recalled specifically in the ensuing claims.

The invention will be described with reference to the annexed drawings, which are provided purely by way of non-limiting example and in which:
- Figures 1a, 1b, 2 and 3 have already been described previously;
- Figure 4 illustrates a principle circuit diagram of an embodiment of a converter apparatus that implements the discharging method according to the invention;
- Figure 5 shows a time plot of driving signals used by the converter apparatus of Figure 3;
- Figure 6 illustrates a principle circuit diagram of a preferred embodiment of the converter apparatus that implements the discharging method according to the invention; and
- Figure 7 represents a diagram of fields of use of the embodiment of Figure 6.

In brief, the discharging method envisages using a converter apparatus comprising a respective additional switch for discharging the DC-link capacitance in addition to the main switches of the switching network of the DC-DC converter. According to a main aspect, overcoming the limit of the classic buck driving, in which a conversion of the energy is made on the high-voltage side towards the low-voltage side of the converter, by modulating the on times of the diagonals of the H-bridge for transferring the voltage on the input node onto the reactive circuit, and hence onto the battery, when the voltage on the secondary drops, instead, below the voltage of the low-voltage battery, the converter starts to be driven in boost mode. This driving in boost mode is obtained by exploiting driving of the additional switches for charging the inductance to the voltage value brought back onto the secondary and driving of the main switches for discharging the reactive circuit to the voltage present on one or the other secondary half-winding of the transformer and thus determine an alternative electrical path for the flow of the current through an additional switch and the corresponding half-winding towards the node to which the battery is connected in order to carry out a complete discharge of said DC-link capacitance.

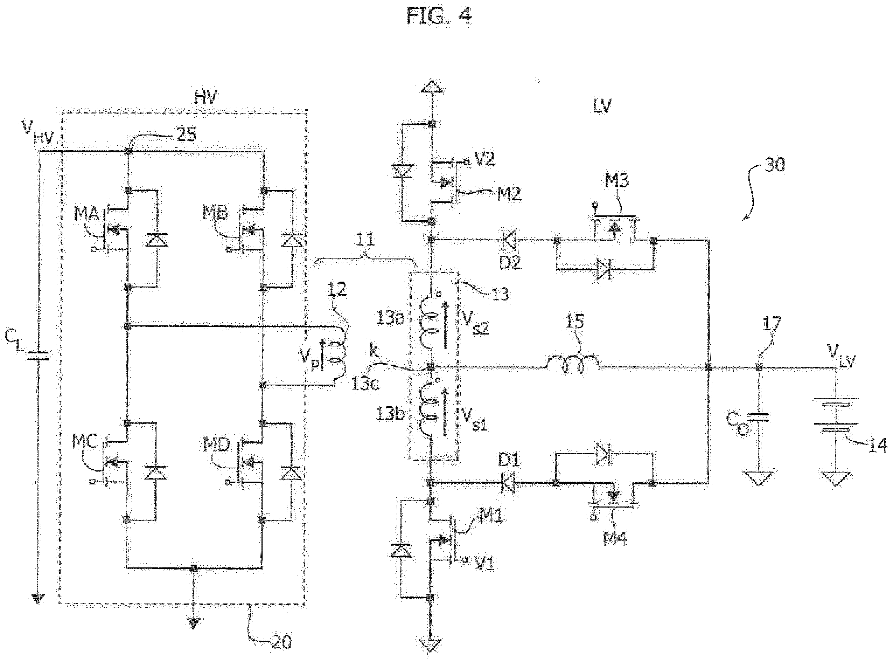

Figure 4 hence illustrates a converter apparatus suited to implementing the discharging method according to the invention.

Said circuit, designated by the reference 30, corresponds substantially to the circuit of Figure 1; however, it comprises the additional switches M3 and M4.

According to a main aspect of the invention, each of the half-windings 13a and 13b that depart from the centre tap 13c of the secondary 13 and go to one and the other terminal of the secondary is both:
- selectively connectable via the respective main switch M2 or M1 to the ground reference 16; and
- selectively connectable, by means of an additional switch M4 or M3, to the node 17 to which the battery 14 is connected.

The additional switch M4 connects the half-winding 13a to the node 17 to which the battery 14 is connected, in parallel to the inductor 15. The additional switch M3 connects the half-winding 13b to the node 17 to which the battery 14 is connected, in parallel to the inductor 15.

Set between the half-winding 13b and the additional switch M3 is a series diode D1, which enables flow of the current to said half-winding 13b and blocks the current to the battery 14. Set between the half-winding 13a and the additional switch M4 is a series diode D2, which enables flow of the current to said half-winding 13a and blocks the current to the battery 14. Said series diodes D1 and D2 prevent - with the additional MOSFETs M3 and M4 alone on the respective branches, in the buck mode, - the respective body diodes from possibly short-circuiting the drain electrodes of the main MOSFET switches M1 and M2 on the battery 14.

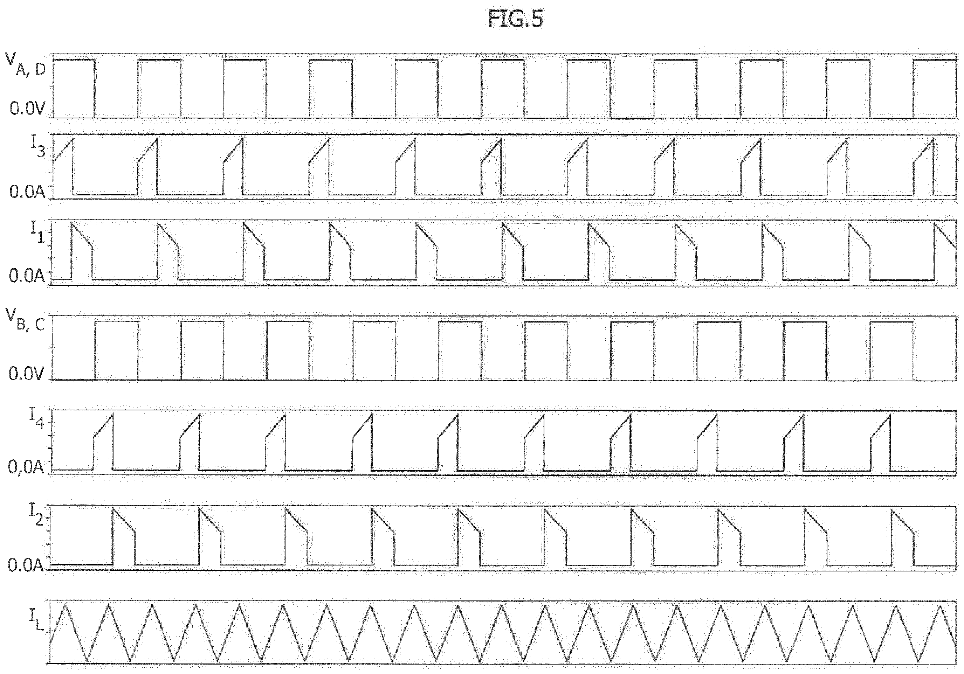

Illustrated in Figure 5 are diagrams representing the time plots of the signals in the converter apparatus 30 of Figure 4, in particular the time plots of the pairs of driving voltages VA, VD and VB, VC, corresponding to the transistors MA, MD and MB, MC on the two diagonals of the bridge 20, and the current I_{L} in the inductor 15. Likewise represented are the currents I₁ and I₂ that flow in the main MOSFETs M1 and M2 and the currents I₃ and I₄ that flow in the additional MOSFETs M3 and M4. Said currents are determined by the states of opening and closing described here and imposed on the driving inputs, or gate electrodes, of the MOSFETs, by corresponding driving signals generated by a controller (not represented in the figures).

Said apparatus 40 enables complete discharging of the DC-link capacitance C_{L}, thus recovering all the energy stored in the capacitor in so far as, when the voltage on the secondary drops below the battery voltage, the converter apparatus starts to be driven in boost mode exploiting driving of the additional MOSFETs M4 and M3.

The MOSFETs MA, MB, MC, MD on the high-voltage side are always driven in a balanced way, i.e., with a 50% duty cycle or in any case a duty cycle synchronous with the secondary winding and longer than or equal to the latter; consequently
- the MOSFET switches MA, MD of the first diagonal of the bridge 20, which are closed, bring back the high voltage V_{HV} scaled by the transformation ratio k, as voltage Vs1, onto the half-winding 13b;
- the MOSFET switches MB, MC of the second diagonal, which are closed, bring back the high voltage V_{HV} scaled by of the transformation ratio k, as voltage Vs2, onto the half-winding 13a.

Once the voltage is brought onto a secondary winding, for example, the half-winding 13b on which the voltage Vs1 is set up, there is brought about closing of the additional switch M3 corresponding to said half-winding 13b with the result that the inductance 15 is recharged to the same voltage as the one present on the winding 13b.

Then, the additional switch M3 is opened to carry out discharge of the energy stored in the inductor 15 onto the battery 14. The main switch M1 corresponding the half-winding 13b is closed to enable flow of the current. Possibly, the current can travel on the body diode of the main MOSFET switch M1, which may not necessarily be closed.

When the voltage is instead is brought onto the other half-winding 13a, as voltage Vs2, driving of the main switch M2 and of the additional switch M4 is similar and symmetrical to what has been described for the half-winding 13b.

Modulation of the duty cycle occurs only on the MOSFET switches on the low-voltage side LV by monitoring the peak value of the current I_{L} on the inductance 15. Modulation of the duty cycle can be made, for example, according to the classic "current mode", that is, by monitoring the inductor current via a corresponding sensor and by turning off the additional MOSFETs M3 and M4, respectively, when said current reaches a pre-set threshold.

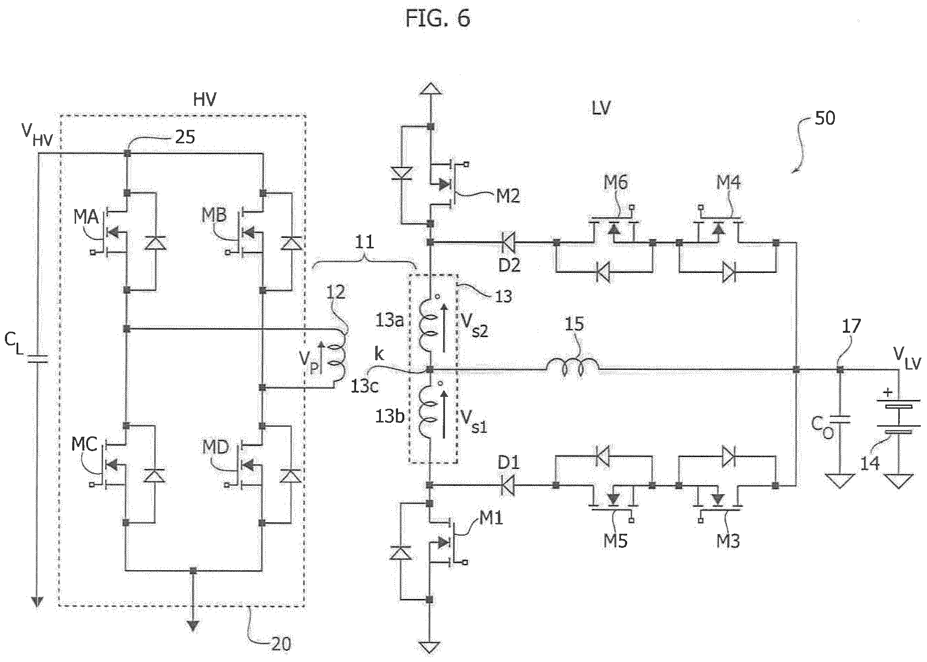

Figure 6 illustrates a preferred embodiment of the invention, where for each half-winding 13a, 13b the respective additional switch M3 or M4 is envisaged but which moreover comprises, set between the respective half-winding 13a or 13b and the additional switch M3 or M4, a further switch M5 or M6, which is connected in the circuit in the place of the series diode D1 or D2 of Figure 4, and also this is preferably obtained through a MOSFET, set in back-to-back configuration with respect to the additional switch M3 or M4, with which it has the source electrode in common. The further switch M5 is connected to the additional switch M3, whilst the further switch M6 is connected to the additional switch M4.

Said circuit performs both the function of discharge of the DC-link capacitance C_{L} and a function of limitation of the in-rush current.

As regards limitation of the in-rush current, each of the half-windings 13a and 13b that go from the centre tap 13a of the secondary 13 to one and the other terminal thereof is both:
- selectively connectable via the respective main switch M2 or M1 to the ground reference 16; and
- selectively connectable, by means of the respective further switch M6 or M5 to the battery 14, determining, when the respective further limiting switch M6 or M5 is closed, a closed path from the secondary 13 to the node 17 in which a current can flow, namely, the current that flows in the inductor 15.

In particular, driving envisages governing said switches of the low-voltage side LV according to the following steps, to limit the in-rush current:
- in a first step, there is carried out closing of the main switch M2 and the further switch M4 of the half-winding 13a, keeping them closed, until the current I_{L} in the inductive storage circuit 15 reaches a limit-current value Ip, in particular measured or estimated by keeping the main switch M1 and the further switch M5 of the half-winding 13b open;
- in a second step, there is carried out opening of the main switch M2, keeping the further switch M6 closed to cause a current to flow towards the battery 14;
- in a third, there is carried out closing of the main switch M1 and the further switch M5, keeping them closed until the current I_{L} in the inductive storage circuit 15 reaches the pre-set value Ip or for the time suitable for reaching said pre-set value Ip, keeping the main switch M2 and the further switch M5 closed;
- in a fourth step, there is carried out opening of the main switch M1, keeping said further switch M5 closed to cause a current to flow towards the battery 14.

Said modality of controlling the in-rush current is described in greater detail in the Italian patent application No. TO2010A000417 filed in the name of the present applicant, the contents of which are understood as being incorporated herein for reference.

It is emphasized in this regard that the in-rush current is a current that is generated upon turning-on of the converter; consequently, the switches M5 and M6 are used for limiting the in-rush current in a temporal step that in general does not overlap the period in which, instead, it is necessary to carry out discharge of the DC-link capacitor.

In the solution described in the Italian patent application No. TO2010A000417, to limit the in-rush current, set in series between the half-windings 13a and 13b and the node 17 are a MOSFET and a diode, but with a polarity reversed with respect to the architecture of Figure 4. In the circuit of Figure 6, a back-to-back configuration of the additional MOSFET M3 (or respectively M4) and of the further MOSFET M5 (M6) is, instead, advantageously adopted, where the additional MOSFET M3 or M4 during limitation performs the function of the diode, through the respective body diode.

The body diode of the additional MOSFETs M3, M4 performs the function of a series blocking diode, which in the aforesaid prior architecture for limiting the in-rush current had to be purposely inserted, whereas the body diode of the further MOSFETs M5, M6 operates as the series diode D1, D2 that blocks the current in the embodiment of Figure 4 during discharge of the DC-link capacitor.

Hence, to obtain complete discharge of the DC-link capacitor C_{L} it is necessary at least to drive the additional switches M3 and M4 and exploit the body diode of the further MOSFET switches, moreover not driving the switches M5 and M6, or else to drive the switches M4, M6 and M3, M5 simultaneously as explained previously. The driving signals that determine the current plots of Figure 5, for example, for the switch M3, are the same for the switch M5 during the discharging mode; i.e., they are governed in the same way, in opening and closing. To carry out, however, the in-rush function, the gates of the MOSFETs M4, M6 and M3, M5 must, instead, be driven with a modulation scheme different from the one used for the discharging mode.

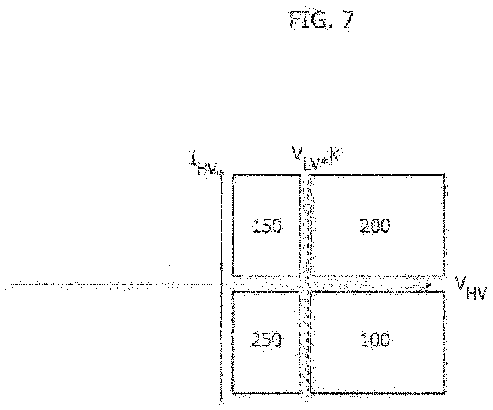

Figure 7 represents a diagram similar to that of Figure 1b, which shows how with the circuit of Figure 6 it is possible to work on the entire high-voltage positive range V_{HV}, both in buck mode and in boost mode. Below the threshold V_{LV}*k it is necessary to operate in buck mode to limit the in-rush current (quadrant 150), whereas it is necessary to operate in boost mode to carry out complete discharge of the DC-link capacitor (quadrant 250).

The proposed solution hence advantageously rules out the need to resort to dissipative methods when the voltage on the DC-link capacitor drops below the battery voltage, since a driving in boost mode is carried out for discharge exploiting driving of the additional switches.

Furthermore, advantageously, the architecture proposed is suited to being integrated easily with a converter-apparatus architecture suited to limiting the in-rush current.

Of course, without prejudice to the principle of the invention, the details of construction and the embodiments may vary widely with respect to what is described and illustrated herein purely by way of example, without thereby departing from the scope of the present invention.

The converter apparatus proposed can be used in an extremely wide range of fields where there is required a DC-DC conversion, for example, in the field of mobile electronic instruments, such as cellphones and laptops. The converter apparatus proposed finds particular preferred application in the automotive sector, for example, in the aforesaid electric or hybrid vehicles, with thermal and electric engines, which comprise two electrical networks, namely, an electrical network of a traditional type, for example, for loads such as lights or the electronic control unit for controlling the thermal engine and a high-voltage electrical network for the electric engine.

The H-bridge of switches of the full-bridge type may also be, according to the applications, a bridge of the half-bridge type, in which some switches are replaced by capacitors.

## Claims

1. A method for discharging a DC-link capacitance (C_{L}) in an insulated DC-DC converter apparatus comprising:
a high-voltage side (HV) comprising:
an H-network (20) of switches (MA, MB, MC, MD), driven by respective driving voltages (VA, VB, VC, VD), connected between an input node (25) on which a d.c. voltage (V_{HV}) is set up and a first winding (12) of a transformer (11); and
a DC-link capacitance (C_{L}) connected in parallel to the input node (25) of the converter apparatus (10; 30; 50); and
a low-voltage side (LV) comprising:
a second winding (13) of said transformer (11) with a smaller number (k) of turns than the first winding (12), with a centre tap (13c), departing from which are a first half-winding (13a) and a second half-winding (13b);
an energy-storage reactive circuit (15), in particular an inductor connected in series between said centre tap (13c) and a node (17) configured for connection of a battery (14) designed to apply a d.c. battery voltage (V_{LV}) ; and
a switching network (M1, M2) for switching said first half-winding (13a) and second half-winding (13b) comprising main switch devices (M1, M2) arranged for connecting selectively the first half-winding (13a) and the second half-winding (13b) to a fixed voltage reference (16), in particular a ground reference,
said discharging method being **characterized in that** it comprises the operations of:
- making, in an initial step, a conversion of the energy from the high-voltage side (HV) to a low-voltage side (LV) of said converter apparatus (10: 30; 50), comprising modulating the on times of diagonals of switches (MA, MD; MB, MC) of the H-bridge (20) for transferring the voltage (V_{HV}) at the input node (25) onto said reactive circuit (15), and
- following upon said initial step, driving said main switches (M1, M2) and additional switches (M3, M4) comprised in said converter apparatus (10; 30; 50) and arranged so as to set selectively in electrical connection, via their opening state and closing state, the respective first half-winding (13a) and second half-winding (13b) of said second winding (13) of the transformer (11) with the output node (17) - configured for connection of a battery (14) -, according to a connection configuration that, in a first configuration state, charges said reactive circuit (15) to the voltage (Vs1, Vs2) present on the corresponding half-winding (13a, 13b) and, in another configuration state, determines an electrical path for the flow of the current through the corresponding main switch (M1, M2) and the corresponding half-winding (13a, 13b) into the node (17) configured for connection of a battery (14), in order to carry out a complete discharge of said DC-link capacitance (C_{L}).

2. The method according to Claim 1, **characterized in that** said operation of driving, following upon said initial step, said main switches (M1, M2) and said additional switches (M3, M4) occurs when the value of the voltage (V_{HV}) on said DC-link capacitance (C_{L}) drops below the voltage value (V_{LV}) of the battery (14) multiplied by the transformation ratio (k) of the transformer (11).

3. The method according to Claim 1 or Claim 2, **characterized in that** said operation of driving said main switches (M1, M2) and said additional switches (M3, M4) comprises:
once the voltage (V_{HV}) on said DC-link capacitance (C_{L}) is brought back onto the first half-winding (13a) or second half-winding (13b) thus obtaining a corresponding voltage (Vs1, Vs2), closing the additional switch (M3, M4) connected to said half-winding (13a, 13b) for recharging the reactive circuit (15) to said corresponding voltage (Vs1, Vs2), keeping the main switch connected to said half-winding (13a, 13b) open;
opening the switch (M3, M4) connected to said half-winding (13a, 13b) for carrying out discharge of the energy stored in the battery (14), while closing the main switch (M1, M2) connected to said half-winding (13a, 13b) to cause a current to flow to the node (17) configured for connection of a battery (14).

4. The method according to any one of the preceding claims, **characterized in that** it comprises blocking (D1, D2; M5, M6) the current that flows from the half-winding (13a, 13b) to the battery (14) through said additional switches (M3, M4).

5. The method according to any one of the preceding claims, **characterized in that** it comprises governing the states of opening and closing of further switches (M5, M6) set in back-to-back configuration with respect to the additional switches (M3, M4) for blocking (D1, D2) the current that flows from the half-winding (13a, 13b) to the battery (14) through said additional switches (M3, M4) and for carrying out a function for control of the in-rush current during a step of turning-on of the converter apparatus (30).

6. The method according to any one of the preceding claims, **characterized in that** said operation of driving, following upon said initial step, said main switches (M1, M2) and said additional switches (M3, M4) further comprises driving the switches (MA, MB, MC, MD) of the H-bridge (20) according to a balanced switching to bring the voltage (V_{HV}) on said DC-link capacitance (C_{L}) alternatively back onto the first half-winding (13a) or the second half-winding (13b), said balanced switching comprising balanced switching of closing of the switches (MA, MD) of a first diagonal of the bridge (20) to bring the voltage (V_{HV}) of the DC-link capacitance (C_{L}) back onto the voltage (Vs1) of the second half-winding (13b) and of closing of the switches (MB, MC) of a second diagonal of the bridge (20) to bring the voltage (V_{HV}) of the DC-link capacitance (C_{L}) back onto the voltage (Vs2) of the first half-winding (13a).

7. An insulated DC-DC converter apparatus comprising:
a high-voltage side (HV) comprising:
an H-network (20) of switches (MA, MB, MC, MD), driven by respective driving voltages (VA, VB, VC, VD), connected between an input node (25) on which a d.c. voltage (V_{HV}) is set up and a first winding (12) of a transformer (11); and
a DC-link capacitance (C_{L}) connected in parallel to the input node (25) of the converter apparatus (10; 20; 30); and
a low-voltage side (LV) comprising:
a second winding (13) of said transformer (11) with a smaller number (k) of turns than the first winding (12), with a centre tap (13c), departing from which are a first half-winding (13a) and a second half-winding (13b);
an energy-storage reactive circuit (15), in particular an inductor, connected in series between said centre tap (13c) and a node (17) configured for connection of a battery (14) designed to apply a d.c. battery voltage (V_{LV}) ; and
a switching network (M1, M2) for switching said first half-winding (13a) and said second half-winding (13b) comprising main switch devices (M1, M2) arranged for connecting the first half-winding (13a) and the second half-winding (13b) selectively to a fixed voltage reference (16), in particular a ground reference,
said apparatus being **characterized in that** it comprises additional switches (M3, M4), arranged so as to set selectively in electrical connection, via their opening state and closing state, the respective first half-winding (13a) and second half-winding (13b) of said second winding (13) of the transformer (11) with the node (17) configured for connection of a battery (14) ;
and comprises a control circuit configured for supplying driving signals to said H-network (20), switching network (M1, M2), and additional switches (M3, M4) for implementing the method according to Claims 1 to 6.

8. The apparatus according to Claim 7, **characterized in that** it makes the conversion between two electrical networks, one at a higher voltage and one at a lower voltage, of a motor vehicle, in particular electrical networks of a hybrid thermal-propulsion and electrical-propulsion vehicle or of a purely electric vehicle.

9. The apparatus according to Claim 7 or Claim 8, **characterized in that** each of said respective additional switches (M3, M4) are MOSFETs, the source electrode of which is connected to a respective half-winding (13a, 13b), and the drain electrode of which is connected to the battery node (14).

10. The apparatus according to any one of Claims 7 to 9, **characterized in that** it comprises, set between each half-winding (13a, 13b) and the respective additional switch (M3, M4) a series diode (D1, D2) for blocking the current from the half-winding (13a, 13b) to the battery (14) through said additional switches (M3, M4).

11. The apparatus according to Claim 9, **characterized in that** it comprises said further MOSFET switches (M5, M6) set in back-to-back configuration by setting in common the respective source electrode, with respect to the additional MOSFET switches (M3, M4) for blocking the current that flows from the battery (14) to the half-winding (13a, 13b) through said additional switches (M3, M4) during a step of limitation of the in-rush current and for blocking the current that flows from the half-winding (13a, 13b) to the battery (14) during discharge of the DC-link capacitance (C_{L}).

## Patentansprüche

1. Verfahren zur Entladung einer Zwischenkreiskapazität (C_{L}) in einer isolierten Gleichspannungswandlervorrichtung, umfassend:
eine Hochspannungsseite (HV), umfassend:
ein H-Netz (20) von Schaltern (MA, MB, MC, MD), die von entsprechenden Spannungen (VA, VB, VC, VD) angetrieben werden und zwischen einem Eingangsknoten (25), an dem eine Gleichspannung (V_{HV}) angelegt wird, und einer ersten Wicklung (12) eines Transformators (11) verbunden sind; und
eine mit dem Eingangsknoten (25) der Wandlervorrichtung (10, 30; 50) parallel verbundene Zwischenkreiskapazität (C_{L}) ; und
eine Niederspannungsseite (LV), umfassend:
eine zweite Wicklung (13) des Transformators (11) mit einer geringeren Anzahl (k) von Windungen als die erste Wicklung (12) und einer Mittelanzapfung (13c), von der eine erste Halbwicklung (13a) und eine zweite Halbwicklung (13b) abgehen;
eine Blind-Energiespeicherschaltung (15), insbesondere einen Induktor, der zwischen der Mittelanzapfung (13c) und einem Knoten (17) in Reihe verbunden ist und zum Anschluss einer Batterie (14) dient, welche zum Anlegen einer Batteriegleichspannung (V_{LV}) ausgelegt ist; und
ein Schaltungsnetz (M1, M2) zum Schalten der ersten Halbwicklung (13a) und der zweiten Halbwicklung (13b), welches die Hauptschalter (M1, M2) umfasst, die dazu dienen, die erste Halbwicklung (13a) und die zweite Halbwicklung (13b) selektiv mit einer Festspannungsreferenz (16), insbesondere einem Massebezug zu verbinden,
wobei das Entladungsverfahren folgende Schritte umfasst:
- in einem ersten Schritt, Umwandeln der Energie von der Hochspannungsseite (HV) zu einer Niederspannungsseite (LV) der Wandlervorrichtung (10, 30; 50), umfassend die Modulation der Einschaltzeiten der diagonalen Schalter (MA, MB, MC, MD) der H-Brücke (20) zur Übertragung der Spannung (V_{HV}) an dem Eingangsknoten (25) an die Blindschaltung (15), und
- in einem anschließenden Schritt, Ansteuern der Hauptschalter (M1, M2) und Zusatzschalter (M3, M4), welche die Wandlervorrichtung (10, 30; 50) umfasst und die so angeordnet sind, dass sie die jeweilige erste Halbwicklung (13a) und zweite Halbwicklung (13b) der zweiten Wicklung (13) des Transformators (11) durch ihren geöffneten Zustand und ihren geschlossenen Zustand selektiv mit dem Ausgangsknoten (17) verbinden - der zum Anschluss einer Batterie (14) dient -, und zwar gemäß einer Verbindungskonfiguration, bei der die Blindschaltung (15) in einem ersten Konfigurationszustand bis zu der Spannung (Vs1, Vs2) aufgeladen wird, die in der entsprechenden Halbwicklung (13a, 13b) vorhanden ist, und bei der in einem anderen Konfigurationszustand ein elektrischer Pfad für den Stromfluss durch den entsprechenden Hauptschalter (M1, M2) und die entsprechende Halbwicklung (13a, 13b) in den Knoten (17) bestimmt wird, der zum Anschluss einer Batterie (14) dient, so dass eine vollständige Entladung der Zwischenkreiskapazität (C_{L}) erfolgt.

2. Verfahren nach Anspruch 1, **dadurch gekennzeichnet, dass** der auf den ersten Schritt folgende Vorgang des Ansteuerns der Hauptschalter (M1, M2) und der Zusatzschalter (M3, M4) ausgeführt wird, wenn der Wert der Spannung (V_{HV}) an der Zwischenkreiskapazität (C_{L}) unter den Spannungswert (V_{LV}) der Batterie (14) fällt, multipliziert mit dem Transformationsverhältnis (k) des Transformators (11).

3. Verfahren nach Anspruch 1 oder 2, **dadurch gekennzeichnet, dass** der Vorgang des Ansteuerns der Hauptschalter (M1, M2) und der Zusatzschalter (M3, M4) Folgendes umfasst:
wenn die Spannung (V_{HV}) an der Zwischenkreiskapazität (C_{L}) wieder an die erste Halbwicklung (13a) oder die zweite Halbwicklung (13b) zurückgebracht worden ist, um eine entsprechende Spannung (Vs1, Vs2) zu erhalten, Schließen des mit der Halbwicklung (13a, 13b) verbundenen Zusatzschalters (M3, M4) zum Wiederaufladen der Blindschaltung (15) bis zu der entsprechenden Spannung (Vs1, Vs2), wobei der mit der Halbwicklung (13a, 13b) verbundene Hauptschalter geöffnet bleibt;
Öffnen des mit der Halbwicklung (13a, 13b) verbundenen Schalters (M3, M4) zum Ausführen einer Entladung der in der Batterie (14) gespeicherten Energie, wobei der mit der Halbwicklung (13a, 13b) verbundene Hauptschalter (M1, M2) geschlossen wird, um zu bewirken, dass ein Strom zu dem Knoten (17) fließt, der zum Anschluss einer Batterie (14) dient.

4. Verfahren nach einem der vorstehenden Ansprüche, **dadurch gekennzeichnet, dass** das Verfahren das Blockieren (D1, D2; M5, M6) des Stroms umfasst, der von der Halbwicklung (13a, 13b) durch die Zusatzschalter (M3, M4) zu der Batterie (14) fließt.

5. Verfahren nach einem der vorstehenden Ansprüche, **dadurch gekennzeichnet, dass** das Verfahren das Regeln des geöffneten und geschlossenen Zustands weiterer Schalter (M5, M6) umfasst, die in Bezug auf die Zusatzschalter (M3, M4) in einer Back-to-Back-Konfiguration angeordnet sind, zwecks Blockieren (D1, D2) des Stroms, der von der Halbwicklung (13a, 13b) durch die Zusatzschalter (M3, M4) zu der Batterie (14) fließt und zum Ausführen einer Funktion zur Regelung des Einschaltstromstoßes während des Einschaltens des Wandlers (30).

6. Verfahren nach einem der vorstehenden Ansprüche, **dadurch gekennzeichnet, dass** der auf den ersten Schritt folgende Vorgang des Ansteuerns der Hauptschalter (M1, M2) und der Zusatzschalter (M3, M4) zudem das Ansteuern der Schalter (MA, MB, MC, MD) der H-Brücke (20) entsprechend eines symmetrischen Schaltens umfasst, um die Spannung (V_{HV}) an der Zwischenkreiskapazität (C_{L}) abwechselnd an die erste Halbwicklung (13a) oder die zweite Halbwicklung (13b) zurückzubringen, wobei das symmetrische Schalten das symmetrische Schließen der Schalter (MA, MD) einer ersten Diagonale der Brücke (20) umfasst, um die Spannung (V_{HV}) der Zwischenkreiskapazität (C_{L}) auf die Spannung (Vs1) der zweiten Halbwicklung (13b) zurückzubringen, und das symmetrische Schließen der Schalter (MB, MC) einer zweiten Diagonale der Brücke (20), um die Spannung (V_{HV}) der Zwischenkreiskapazität (C_{L}) auf die Spannung (Vs2) der ersten Halbwicklung (13a) zurückzubringen.

7. Isolierte Gleichspannungswandlervorrichtung, umfassend:
eine Hochspannungsseite (HV), umfassend:
ein H-Netz (20) von Schaltern (MA, MB, MC, MD), die von entsprechenden Spannungen (VA, VB, VC, VD) angetrieben werden und zwischen einem Eingangsknoten (25), an dem eine Gleichspannung (V_{Hv}) angelegt wird, und einer ersten Wicklung (12) eines Transformators (11) verbunden sind; und
eine mit dem Eingangsknoten (25) des Gleichspannungswandlers (10, 30; 50) parallel verbundene Zwischenkreiskapazität (C_{L}); und
eine Niederspannungsseite (LV), umfassend:
eine zweite Wicklung (13) des Transformators (11) mit einer geringeren Anzahl (k) von Windungen als die erste Wicklung (12) und einer Mittelanzapfung (13c), von der eine erste Halbwicklung (13a) und eine zweite Halbwicklung (13b) abgehen;
eine Blind-Energiespeicherschaltung (15), insbesondere einen Induktor, der zwischen der Mittelanzapfung (13c) und einem Knoten (17) in Reihe verbunden ist und zum Anschluss einer Batterie (14) dient, welche zum Anlegen einer Batteriegleichspannung (V_{LV}) ausgelegt ist; und
ein Schaltungsnetz (M1, M2) zum Schalten der ersten Halbwicklung (13a) und der zweiten Halbwicklung (13b), welches die Hauptschalter (M1, M2) umfasst, die dazu dienen, die erste Halbwicklung (13a) und die zweite Halbwicklung (13b) selektiv mit einer Festspannungsreferenz (16), insbesondere einem Massebezug zu verbinden,
wobei die Vorrichtung **dadurch gekennzeichnet ist, dass** sie Zusatzschalter (M3, M4) umfasst, die so angeordnet sind, dass sie die jeweilige erste Halbwicklung (13a) und zweite Halbwicklung (13b) der zweiten Wicklung (13) des Transformators (11) durch ihren geöffneten Zustand und ihren geschlossenen Zustand selektiv mit dem Ausgangsknoten (17) verbinden, der zum Anschluss einer Batterie (14) dient;
wobei die Vorrichtung zudem eine Steuerschaltung umfasst, welche Steuersignale an das H-Netz (20), das Schaltungsnetz (M1, M2) und die Zusatzschalter (M3, M4) sendet, so dass das Verfahren nach den Ansprüchen 1 bis 6 ausgeführt wird.

8. Vorrichtung nach Anspruch 7, **dadurch gekennzeichnet, dass** die Umwandlung zwischen zwei elektrischen Netzen, eins mit einer höheren Spannung und eins mit einer niedrigeren Spannung, eines Kraftfahrzeugs ausgeführt wird, insbesondere elektrischen Netzen eines Hybridfahrzeugs mit Wärme- und Elektroantrieb oder eines reinen Elektrofahrzeugs.

9. Vorrichtung nach Anspruch 7 oder 8, **dadurch gekennzeichnet, dass** jeder der Zusatzschalter (M3, M4) MOSFETs, deren Sourceelektrode mit einer entsprechenden Halbwicklung (13a, 13b) verbunden ist, und deren Drainelektrode mit dem Batterieknoten (14) verbunden ist.

10. Vorrichtung nach einem der Ansprüche 7 bis 9, **dadurch gekennzeichnet, dass** die Vorrichtung zwischen jeder Halbwicklung (13a, 13b) und dem entsprechenden Zusatzschalter (M3, M4) eine Reihendiode (D1, D2) zum Blockieren des Stromes umfasst, der von der Halbwicklung (13a, 13b) durch die Zusatzschalter (M3, M4) zu der Batterie (14) fließt.

11. Vorrichtung nach Anspruch 9, **dadurch gekennzeichnet, dass** die Vorrichtung die weiteren MOSFET-Schalter (M5, M6) umfasst, die in einer Back-to-Back-Konfiguration angeordnet sind, indem die jeweilige Sourceelektrode in Bezug auf die zusätzlichen MOSFET-Schalter (M3, M4) als gemeinsame Elektrode dient, so dass der Strom, der von der Batterie (14) durch die Zusatzschalter (M3, M4) zu der Halbwicklung (13a, 13b) fließt, während einer Begrenzung des Einschaltstromstoßes blockiert wird, und der Strom, der von der Halbwicklung (13a, 13b) zu der Batterie (14) fließt, während des Entladens der Zwischenkreiskapazität (C_{L}) blockiert wird.

## Revendications

1. Procédé pour décharger un condensateur de liaison CC (C_{L}) dans un appareil convertisseur CC-CC isolé, comprenant :
un côté haute tension (HV) comportant
un réseau en H (20) de commutateurs (MA, MB, MC, MD) commandés par des tensions de commande (VA, VB, VC, VD) correspondantes, connectés entre un noeud d'entrée (25) sur lequel une tension CC (V_{HV}) est appliquée et un premier enroulement (12) d'un transformateur (11), et
un condensateur de liaison CC (C_{L}) connecté en parallèle au noeud d'entrée (25) de l'appareil convertisseur (10 ; 30 ; 50), et
un côté basse tension (LV) comportant
un deuxième enroulement (13) du transformateur (11) avec un nombre de spires (k) inférieur à celui du premier enroulement (12), avec un point de connexion central (13c) à partir duquel partent un premier demi-enroulement (13a) et un second demi-enroulement (13b),
un circuit réactif de stockage d'énergie (15), notamment une inductance connectée en série entre le point de connexion central (13c) et un noeud (17) configuré pour le branchement d'une batterie (14) adaptée pour appliquer une tension de batterie CC (V_{LV}), et
un réseau de commutation (M1, M2) pour commuter le premier demi-enroulement (13a) et le second demi-enroulement (13b), comportant des dispositifs principaux de commutation (M1, M2) adaptés pour connecter sélectivement le premier demi-enroulement (13a) et le second demi-enroulement (13b) à une référence de tension fixe (16), notamment une référence de masse,
le procédé pour décharger étant **caractérisé en ce qu'**il comprend les actions de :
- effectuer, dans une étape initiale, une conversion de l'énergie du côté haute tension (HV) à un côté basse tension (LV) de l'appareil convertisseur (10 ; 30 ; 50), comprenant moduler les temps de fonctionnement des commutateurs en diagonale (MA, MD ; MB, MC) du pont en H (20) pour transférer la tension (V_{HV}) au noeud d'entrée (25) vers le circuit réactif (15), et
- à la suite de l'étape initiale, commander les commutateurs principaux (M1, M2) et les commutateurs supplémentaires (M3, M4) compris dans l'appareil convertisseur (10 ; 30 ; 50) et adaptés pour mettre sélectivement en connexion électrique, par leur état ouvert et leur état fermé, le premier demi-enroulement (13a) et le second demi-enroulement (13b) correspondant du deuxième enroulement (13) du transformateur (11) avec le noeud de sortie (17) - configuré pour le branchement d'une batterie (14) - selon une configuration de branchement qui, dans un premier état de configuration, charge le circuit réactif (15) à la tension (Vₛ₁, Vₛ₂) présente au demi-enroulement (13a, 13b) correspondant et, dans un autre état de configuration, détermine un chemin électrique pour le flux de courant passant par le commutateur principal (M1, M2) et le demi-enroulement (13a, 13b) correspondant dans le noeud (17) configuré pour le branchement d'une batterie (14), afin d'effectuer un déchargement complet du condensateur de liaison CC (C_{L}).

2. Procédé selon la revendication 1, **caractérisé en ce que** l'action, qui suit l'étape initiale, de commander les commutateurs principaux (M1, M2) et les commutateurs supplémentaires (M3, M4) survient, lorsque la valeur de la tension (V_{HV}) au condensateur de liaison CC (C_{L}) tombe en-dessous de la valeur de tension (V_{LV}) de la batterie (14) multipliée par le coefficient de transformation (k) du transformateur (11).

3. Procédé selon la revendication 1 ou 2, **caractérisé en ce que** l'opération de commander les commutateurs principaux (MA, M2) et les commutateurs supplémentaires (M3, M4) comprend :
lorsque la tension (V_{HV}) au condensateur de liaison CC (C_{L}) est ramenée au premier demi-enroulement (13a) ou second demi-enroulement (13b), obtenant ainsi une tension correspondante (Vₛ₁, Vₛ₂), fermer le commutateur supplémentaire (M3, M4) connecté au demi-enroulement (13a, 13b) pour recharger le circuit réactif (15) à la tension correspondante (Vₛ₁, Vₛ₂), maintenant ouvert le commutateur principal connecté au demi-enroulement (13a, 13b),
ouvrir le commutateur (M3, M4) connecté au demi-enroulement (13a, 13b) pour effectuer le déchargement de l'énergie stockée dans la batterie (14), tout en fermant le commutateur principal (M1, M2) connecté au demi-enroulement (13a, 13b) pour faire couler un courant au noeud (17) configuré pour le branchement d'une batterie (14).

4. Procédé selon l'une des revendications précédentes, **caractérisé en ce qu'**il comprend bloquer (D1, D2 ; M5, M6) le courant qui coule du demi-enroulement (13a, 13b) à la batterie (14) par les commutateurs supplémentaires.

5. Procédé selon l'une des revendications précédentes, **caractérisé en ce qu'**il comprend gérer les états d'ouverture et de fermeture d'autres commutateurs (M5, M6) mis en configuration dos-à-dos par rapport aux commutateurs supplémentaires (M3, M4) pour bloquer (D1, D2) le courant qui coule du demi-enroulement ((13a, 13b) à la batterie (14) par les commutateurs supplémentaires (M3, M4) et pour mettre en oeuvre une fonction pour commander le courant d'enclenchement pendant une étape de mise en marche de l'appareil convertisseur (30).

6. Procédé selon l'une des revendications précédentes, **caractérisé en ce que** l'action, qui suit l'étape initiale, de commander les commutateurs principaux (M1, M2) et les commutateurs supplémentaires (M3, M4) comprend en outre commander les commutateurs (MA, MB, MC, MD) du pont en H (20) selon une commutation équilibrée pour ramener la tension (V_{HV}) au condensateur de liaison CC (C_{L}) alternativement au premier demi-enroulement (13a) ou au second demi-enroulement (13b), la commutation équilibrée comprenant une commutation équilibrée de fermeture des commutateurs (MA, MD) d'une première diagonale du pont (20) pour ramener la tension (V_{HV}) du condensateur de liaison CC (C_{L}) à la tension (Vₛ₁) du second demi-enroulement (13b) et de fermeture des commutateurs (MB, MC) d'une seconde diagonale du pont (20) pour ramener la tension (V_{HV}) du condensateur de liaison CC (C_{L}) à la tension (Vₛ₂) du premier demi-enroulement (13a).

7. Appareil convertisseur CC-CC isolé comprenant :
un côté haute tension (HV) comportant
un réseau en H (20) de commutateurs (MA, MB, MC, MD) commandés par des tensions de commande (VA, VB, VC, VD) correspondantes, connectés entre un noeud d'entrée (25) sur lequel une tension CC (V_{HV}) est appliquée et un premier enroulement (12) d'un transformateur (11), et
un condensateur de liaison CC (CL) connecté en parallèle au noeud d'entrée (25) de l'appareil convertisseur (10 ; 30 ; 50), et
un côté basse tension (LV) comportant
un deuxième enroulement (13) du transformateur (11) avec un nombre de spires (k) inférieur à celui du premier enroulement (12), avec un point de connexion central (13c) à partir duquel partent un premier demi-enroulement (13a) et un second demi-enroulement (13b),
un circuit réactif de stockage d'énergie (15), notamment une inductance connectée en série entre le point de connexion central (13c) et un noeud (17) configuré pour le branchement d'une batterie (14) adaptée pour appliquer une tension de batterie CC (V_{LV}), et
un réseau de commutation (M1, M2) pour commuter le premier demi-enroulement (13a) et le second demi-enroulement (13b), comportant des dispositifs principaux de commutation (M1, M2) adaptés pour connecter sélectivement le premier demi-enroulement (13a) et le second demi-enroulement (13b) à une référence de tension fixe (16), notamment une référence de masse,
l'appareil étant **caractérisé en ce qu'**il comprend des commutateurs supplémentaires (M3, M4) adaptés pour mettre sélectivement en connexion électrique, par leur état ouvert et leur état fermé, le premier demi-enroulement (13a) et le second demi-enroulement (13b) correspondant du deuxième enroulement (13) du transformateur (11) avec le noeud de sortie (17) configuré pour le branchement d'une batterie (14),
et comprend un circuit de commande configuré pour fournir des signaux de commande au réseau en H (20), au réseau de commutation (M1, M2) et aux commutateurs supplémentaires (M3, M4) pour mettre en oeuvre le procédé selon les revendications 1 à 6.

8. Appareil selon la revendication 7, **caractérisé en ce qu'**il effectue la conversion entre deux réseaux, l'un à une tension plus élevée et l'autre à une tension moindre, d'un véhicule à moteur, notamment dans des réseaux électriques d'un véhicule à motorisation hybride d'entraînement thermique et d'entraînement électrique ou d'un véhicule purement électrique.

9. Appareil selon la revendication 7 ou 8, **caractérisé en ce que** chacun des commutateurs supplémentaires (M3, M4) respectifs est un MOSFET, l'électrode de source duquel étant connectée à un demi-enroulement (13a, 13b) correspondant, et l'électrode de drain duquel étant connectée au noeud de batterie (14).

10. Appareil selon l'une des revendications 7 à 9, **caractérisé en ce qu'**il comprend, intercalée entre chaque demi-enroulement (13a, 13b) et le commutateur supplémentaire (M3, M4) respectif, une diode en série (D1, D2) pour bloquer le courant du demi-enroulement (13a, 13b) à la batterie (14) par les commutateurs supplémentaires (M3, M4).

11. Appareil selon la revendication 9, **caractérisé en ce qu'**il comprend les autres commutateurs MOSFET (M5, M6), mis en une configuration dos-à-dos en mettant en commun l'électrode de source respective, par rapport aux commutateurs supplémentaires MOSFET (M3, M4) pour bloquer le courant qui coule de la batterie (14) au demi-enroulement (13a, 13b) par les commutateurs supplémentaires (M3, M4) pendant une étape de limitation du courant d'enclenchement et pour bloquer le courant qui coule du demi-enroulement (13a, 13b) à la batterie (14) pendant le déchargement du condensateur de liaison CC (C_{L}).
